# EUROPEAN PATENT APPLICATION

(11) **EP 3 806 195 A1**
(43) Date of publication of application: **14.04.2021**
(21) Application number: 19811732.7
(22) Date of filing: 17.05.2019
(51) Int. Cl.: H01M 2/26

(54) **LITHIUM ION SECONDARY BATTERY COMPONENT AND MANUFACTURING METHOD THEREFOR, AND LITHIUM ION SECONDARY BATTERY**

(30) Priority: 31.05.2018 CN 201810556198
(71) Applicant: BYD Company Limited, Guangdong 518118 (CN)
(72) Inventor: YUAN, Wansong, Shenzhen, Guangdong 518118 (CN); PAN, Yi, Shenzhen, Guangdong 518118 (CN); LIANG, Guihai, Shenzhen, Guangdong 518118 (CN); TANG, Fulan, Shenzhen, Guangdong 518118 (CN)
(74) Representative: Arnold & Siedsma
(86) International application number: PCT/CN2019/087467
(87) International publication number: WO 2019/228200

(57) **Abstract**

An electrode assembly for a lithium-ion secondary battery and a preparation method thereof, and a lithium-ion secondary battery are disclosed. The electrode assembly comprises an electrode and an electrode post, where an electrode tab is extended from the electrode; a welding connection portion is formed by welding between the electrode tab and the electrode post; the welding connection portion has a bulge welding defect; the surface of the welding connection portion is covered with a polymer protective layer, and the thickness of the polymer protective layer is greater than or equal to the thickness of the bulge welding defect; and the bulge welding defect is embedded in the polymer protective layer.

## Description

### CROSS-REFERENCE TO RELATED APPLICATIONS

This application claims the priority to Chinese Patent Application No. 201810556198.X filed on May 31, 2018 with the State Intellectual Property Office of the People's Republic of China, and entitled "Electrode assembly for lithium-ion secondary battery and preparation method thereof, and lithium-ion secondary battery", which is incorporated herein by reference in its entirety.

### FIELD

The present disclosure relates to the field of lithium-ion secondary batteries, and in particular, to an electrode assembly for a lithium-ion secondary battery and a preparation method thereof, and a lithium-ion secondary battery.

### BACKGROUND

In the production of lithium ion secondary batteries, the electrode current collector foil needs to be welded with a connector that provide the external connection of the battery. This process is more complicated in the production of power battery, and multiple welding processes are required, such as pre-welding of the electrode tab to the current collector foil, welding of the foil lug and a flexible connector, and welding of the flexible connector and a battery cover plate, etc. At present, ultrasonic welding or laser welding is mostly employed in these processes. During the welding process, some defects such as welding slag, burrs and other hidden dangers to battery safety are formed. In order to improve the safety of batteries, attaching an insulating tape or a high -temperature resistant insulating tape to these high-risk areas after dust removal is generally adopted to solve the above problems.

This type of products has the following shortcomings. First, the tape has poor resistance to electrolyte immersion, because the presence of weld seams causes the metal surface to be uneven, so the tape cannot be closely attached to the metal surface, and the electrolyte trend to penetrate into the inside of the tape and damage the adhesion between the tape and metal surface, causing the tape to fall off. When the high-risk areas such as welded connector are exposed, the structures such as welding slag and burrs will endanger the safety performance of the battery. Second, some larger or sharper welding slag or burr structure will pierce the tape, leading to the failure of the protective measures by attaching the tape.

### SUMMARY

An object of the present disclosure is to provide an electrode assembly for a lithium-ion secondary battery, which can prevent defects such as welding slag and burrs from being exposed and ensure the battery safety.

To achieve the above object, a first aspect of the present disclosure provides an electrode assembly for a lithium-ion secondary battery, which includes an electrode and an electrode post, where an electrode tab is extended from the electrode; a welding connection portion is formed by welding between the electrode tab and the electrode post; the welding connection portion has a bulge welding defect; the surface of the welding connection portion is covered with a polymer protective layer, and the thickness of the polymer protective layer is greater than or equal to the thickness of the bulge welding defect; and the bulge welding defect is embedded in the polymer protective layer.

In some embodiments, the bulge welding defect is fully contact with the polymer protective layer.

In some embodiments, the polymer protective layer is a polymer protective layer formed by dispensing or applying an adhesive on the surface of the welding connection portion.

In some embodiments, the welding connection portion includes a first welding connection portion, formed by welding the electrode post with the electrode tab or by welding a lead-out palte extending from the electrode post with the electrode tab. The first welding connection portion includes an electrode tab side of the first welding connection portion, and the polymer protective layer covers the surface of the electrode tab side of the first welding connection portion.

In some embodiments, the electrode assembly further includes a connector, and the welding connection portion includes a second welding connection portion and a third welding connection portion. One end of the connector is welded with the electrode tab to form the second welding connection portion; and the other end of the connector is welded with the electrode post to form the third welding connection portion, or the other end of the connector is welded with the lead-out palte extending from the electrode post, to form the third welding connection portion. The third welding connection portion includes a connector side of the third welding connection portion. The polymer protective layer covers at least the surfaces of both sides of the second welding connection portion and the surface of the connector side of the third welding connection portion.

In some embodiments, the ratio of the thickness of the bulge welding defect to the thickness of the polymer protective layer is (0.1-0.9):1.

In some embodiments, the welding connection portion further has a weld seam, and the polymer protective layer has a filling protrusion extending into the weld seam.

In some embodiments, the electrode assembly further includes an insulating layer covering the polymer protective layer.

In some embodiments, the insulating layer is at least one of a polypropylene insulating layer, a polyethylene insulating layer, and a polyvinyl chloride insulating layer.

In some embodiments, the molding shrinkage of the polymer in the polymer protective layer is 1 to 4%.

In some embodiments, the polymer protective layer is at least one of a hot-melt adhesive polymer protective layer, a photocurable adhesive polymer protective layer, and a pressure-sensitive adhesive polymer protective layer.

In some embodiments, the hot-melt adhesive is at least one selected from a atactic polypropylene hot melt adhesive, a copolymer of ethylene and/or propylene with an oxygen-containing olefin, polystyrene, a copolymer of styrene and butadiene, a copolymer of isoprene and butadiene, an epoxy-modified styrene-butadiene-styrene copolymer, and a dimer acid type polyamide hot melt adhesive. The photocurable adhesive is a UV curable adhesive that is at least one selected from the group consisting of an acrylate-based UV curable adhesive, an alicyclic epoxy resin-based UV curable adhesive, an aliphatic epoxy resin-based UV curable adhesive, an aromatic epoxy resin-based UV curable adhesive, a bisphenol A epoxy-modified acrylate-based UV-curable adhesive and a phenolic epoxy-modified acrylate-based UV-curable adhesive. The pressure-sensitive adhesive is at least one selected from a cross-linked acrylate-based pressure sensitive adhesive, a silicone-based pressure sensitive adhesive, a polyurethane-based pressure sensitive adhesive, and a rubber-based pressure sensitive adhesive.

A second aspect of the present disclosure provides a method for preparing an electrode assembly for a lithium-ion secondary battery including an electrode and an electrode post, where an electrode tab is extended from the electrode, and a lead-out palte is extended from the electrode post. The method comprises the steps of S1: welding the electrode tab to the electrode post and forming a welding connection portion, where the welding connection portion has a bulge welding defect; and S2: applying a polymer on the surface of the welding connection portion and molding to form a polymer protective layer into which the bulge welding defect is embedded, where the applied amount of the polymer is such that the thickness of the polymer protective layer is greater than or equal to the thickness of the bulge welding defect.

In some embodiments, the polymer protective layer is formed by dispensing or applying an adhesive.

In some embodiments, the welding connection portion includes a first welding connection portion. The method for forming the first welding connection portion includes welding the electrode tab to the electrode post to form the first welding connection portion or welding the electrode tab to the lead-out palte extending from the electrode post to form the first welding connection portion. The first welding connection portion includes an electrode tab side of the first welding connection portion, and a polymer is applied to the surface of the electrode tab side of the first welding connection portion and molded to form the polymer protective layer.

In some embodiments, the electrode assembly further includes a connector, and the welding connection portion includes a second welding connection portion and a third welding connection portion. The method for forming the second welding connection portion and the third welding connection portion comprises welding one end of the connector to the electrode tab to form the second welding connection portion; and welding the other end of the connector to the electrode post to form the third welding connection portion, or welding the other end of the connector to the lead-out palte extending from the electrode post, to form the third welding connection portion. The third welding connection portion includes a connector side of the third welding connection portion. A polymer is applied to the surfaces of both sides of the second welding connection portion and the surface of the connector side of the third welding connection portion and molded respectively to form the polymer protective layer.

In some embodiments, the operation in step S2 includes at least one of a: coating a hot melt adhesive to be cured on the surface of the welding connection portion, and curing it to form the polymer protective layer; b: coating a photocurable adhesive to be cured on the surface of the welding connection portion; and curing under irradiation to form the polymer protective layer; and c: allowing a pressure sensitive adhesive to cover the welding connection portion under pressure and then removing the pressure to form the polymer protective layer.

In some embodiments, the temperature of the hot melt adhesive in the molten state is 100-180°C, the viscosity is 1000-10000 CP, the curing temperature is 20-25°C, and the curing time is 0-30s; the viscosity of the photocurable adhesive is 1000-5000CP, and the irradiation time is 5-20s; and the pressure is 0.2-0.8 MPa.

In some embodiments, the method further includes: covering the polymer protective layer with an insulating material to form an insulating layer.

A third aspect of the present disclosure provides a lithium-ion secondary battery, which includes a cover plate, and an electrode assembly for a lithium-ion secondary battery according to the first aspect of the present disclosure, or an electrode assembly for a lithium-ion secondary battery obtained by the method according to the second aspect of the present disclosure.

According to the electrode assembly for a lithium-ion secondary battery provided in the above technical solutions of the present disclosure, a polymer protective layer is provided on the surface of the welding connection portion between the electrode tab and the lead-out palte, which can bury the bulge welding defect of the welding connection portion and allowed it to be embedded therein. In this way, the weld defects are immobilized and the surface of the welding connection portion is smooth and free of protrusions, which effectively solves the problem of degraded battery safety performance caused by weld defects protruding and piercing the separator. Moreover, the polymer protective layer is resistant to electrolyte immersion and electrochemical oxidation-reduction, thus improving the durability and stability of the electrode assembly and battery.

Additional aspects and advantages of the present disclosure will be partly given in and partly apparent from the description below, or understood through practice of the present disclosure.

### BRIEF DESCRIPTION OF THE DRAWINGS

The accompanying drawings are provided to further understand the present disclosure, and they constitute a part of this specification. The accompanying drawings, along with the following specific implementations, are used to explain the present disclosure, and do not constitute a limitation to the present disclosure. In the accompanying drawings:
Fig. 1 is a schematic cross-sectional view of a welding connection portion of a lithium-ion secondary battery according to a specific embodiment of the present disclosure.
Fig. 2 is a schematic structural view of a lithium-ion secondary battery according to a specific embodiment of the present disclosure.
Fig. 3 is a side view (i.e., the left view of Fig. 2) of a lithium-ion secondary battery according to a specific embodiment of the present disclosure.
Fig. 4 is a schematic structural view of a lithium-ion secondary battery according to another specific embodiment of the present disclosure.
Fig. 5 is a side view (i.e., the left view of Fig. 4) of a lithium-ion secondary battery according to another specific embodiment of the present disclosure.
Fig. 6 is a micrograph showing the cross section before electrolyte immersion of an electrode assembly for a lithium-ion secondary battery according to a specific embodiment of the present disclosure.
Fig. 7 is a micrograph showing the cross section after electrolyte immersion of an electrode assembly for a lithium-ion secondary battery according to a specific embodiment of the present disclosure.
Fig. 8 is a micrograph showing the cross section before electrolyte immersion of an electrode assembly for a lithium-ion secondary battery according to another specific embodiment of the present disclosure.
Fig. 9 is a micrograph showing the cross section after electrolyte immersion of an electrode assembly for a lithium-ion secondary battery according to another specific embodiment of the present disclosure.

### List of numerals

| | |
|---|---|
| 1 Polymer protective layer | 2 Bulge welding defect |
| 3 Pole | 4 Lad-out piece |
| 5 Connector | 6 Lug |
| 7 Electrode plate | 8 Battery cover plate |
| 9 Insulating layer | 10 Welding connection portion |

### DETAILED DESCRIPTION

Embodiments of the present disclosure will be exemplarily described in detail hereinafter with reference to accompanying drawings in which the same or like reference characters refer to the same or like elements or elements having the same or like functions throughout. The embodiments described below with reference to the accompanying drawings are exemplary, and are intended to explain the present disclosure, rather than limiting the present disclosure.

Endpoints of a range and any value disclosed in this specification should not be limited to a precise range or value. The range or value should be understood as a value close to the range or value. For the value range, endpoint values of the ranges, or endpoint values of the ranges and independent point values, or independent point values may be combined with each other to form one or more new value ranges, and these value ranges shall be regarded as being specifically disclosed in this specification.

In the present disclosure, unless otherwise stated, directional terms such as "up and down" used herein generally refers to up and down in a normal service state, and "inner and outer" are described in response to the apparatus.

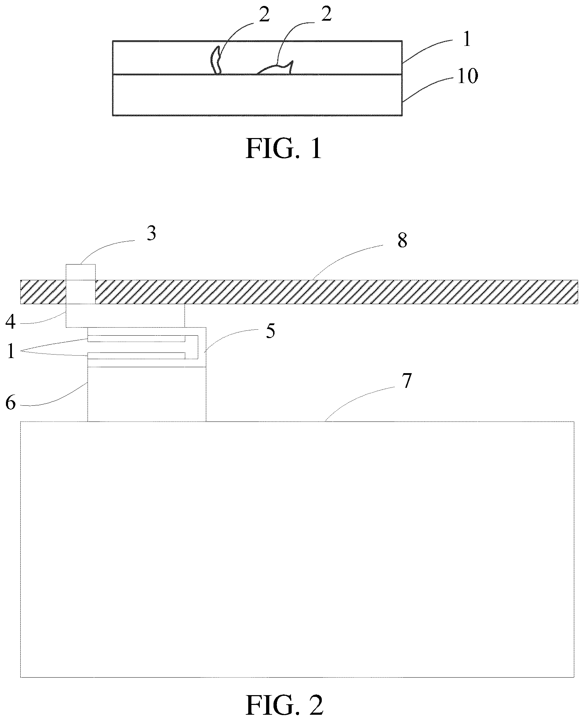

As shown in Figs. 1-5, a first aspect of the present disclosure provides an electrode assembly for a lithium-ion secondary battery, which includes an electrode 7 and an electrode post 3, where an electrode tab 6 is extended from the electrode 7; a welding connection portion 10 is formed by welding between the electrode tab 6 and the electrode post 3; the welding connection portion 10 has a bulge welding defect 2; the surface of the welding connection portion 10 is covered with a polymer protective layer 1, and the thickness of the polymer protective layer 1 is greater than or equal to the thickness of the bulge welding defect 2; and the bulge welding defect 2 is embedded in the polymer protective layer 1.

According to the electrode assembly for a lithium-ion secondary battery of the present disclosure, a polymer protective layer is provided on the surface of the welding connection portion between the electrode tab and the lead-out palte, which can bury the bulge welding defect of the welding connection portion and allowed it to be embedded therein. In this way, the weld defects are immobilized and the surface of the welding connection portion is smooth and free of protrusions, which effectively solves the problem of degraded battery safety performance caused by weld defects protruding and piercing the separator. Moreover, the polymer protective layer is resistant to electrolyte immersion and electrochemical oxidation-reduction, thus improving the durability and stability of the electrode assembly and battery.

According to the present disclosure, the polymer protective layer may partially or fully cover the welding connection portion, and preferably covers the entire surface of the welding connection portion, so as to improve the stability of the weld portion.

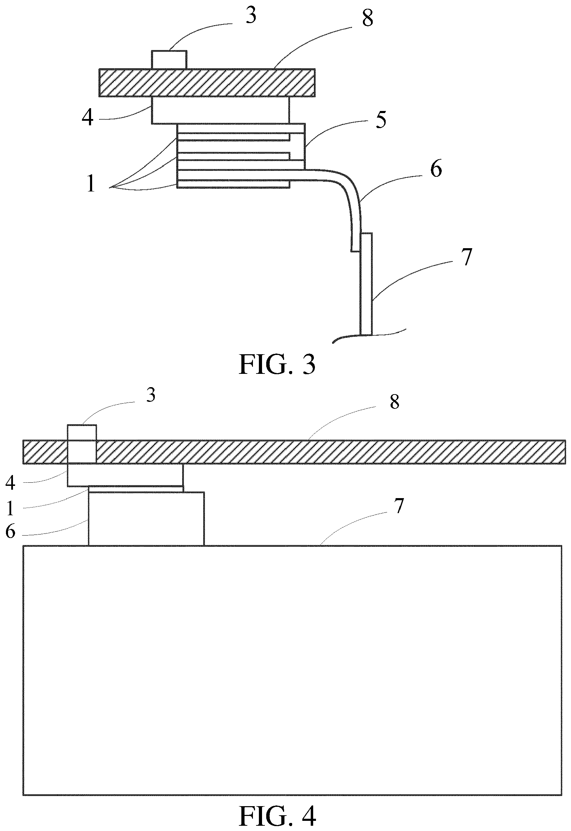

As shown in Figs. 4-5, in a specific embodiment of the present disclosure, the welding connection portion includes a first welding connection portion, which may be a welding connection portion formed by welding the electrode post 3 with the electrode tab 6 or a welding connection portion formed by welding a lead-out palte 4 extending from the electrode post with the electrode tab 6. The first welding connection portion includes an electrode tab side of the first welding connection portion, and the polymer protective layer 1 covers the surface of the electrode tab side of the first welding connection portion. The surface of the electrode tab side of the first welding connection portion refers to one of the two main surfaces of the first welding connection portion on the side relatively close to the electrode tab.

As shown in Figs. 2-3, in another specific embodiment of the present disclosure, the electrode assembly further includes a connector 5, and the welding connection portion includes a second welding connection portion and a third welding connection portion. In this situation, one end of the connector 5 is welded with the electrode tab 6 to form the second welding connection portion; and the other end of the connector 5 is welded with the electrode post 3 to form the third welding connection portion, or the other end of the connector 5 is welded with the lead-out palte 4 extending from the electrode post, to form the third welding connection portion. The third welding connection portion includes a connector side of the third welding connection portion. The polymer protective layer covers at least the surfaces of both sides of the second welding connection portion and the surface of the connector side of the third welding connection portion. The surface of the connector side of the third welding connection portion refers to one of the two main surfaces of the third welding connection portion on the side relatively close to the connector.

According to the present disclosure, in order to completely bury the bulge welding defect, the ratio of the thickness of the bulge welding defect to the thickness of the polymer protective layer may be (0.1-0.9):1, for example, 0.1:1, 0.2:1, 0.3:1, 0.4:1, 0.5:1, 0.6:1, 0.7:1, 0.8:1, 0.9:1, preferably (0.3-0.6):1. The thickness of the polymer protective layer refers to the maximum thickness from the surface of the polymer protective layer to the contact surface between the polymer protective layer and the welding connection portion, and the thickness of the bulge welding defect refers to the maximum height of the bulge welding defect in the thickness direction of the polymer protective layer. In a preferred thickness range, it can be further ensured that all bulge welding defects in the welding connection portion do not pierce through the polymer protective layer during the use of the electrode assembly, which effectively protects the electrode assembly, reduces the risk of short circuit of the battery caused by weld slag, and burrs piercing the separator, and improves the battery safety. Moreover, the protective layer can be quickly formed to prevent the protective layer from being too thick to affect the electrode assembly and performance of the electrode assembly.

According to the present disclosure, the meaning of bulge welding defect is well known to those skilled in the art. For example, the bulge welding defect may include burrs and/or weld slag protruding from the electrode tab and lead-out palte on the surface before welding. Preferably, the maximum height of the burr and solder slag may be 50-800 µm, for example 50µm, 75µm, 100µm, 125µm, 150µm, 175µm, 200µm, 225µm, 250µm, 275µm, 300µm, 325µm, 350µm, 375µm, 400µm, 425µm, 450µm 475 µm, 500 µm, 525 µm, 550 µm, 575 µm, 600 µm, 625 µm, 650 µm, 675 µm, 700 µm, 725 µm, 750 µm, 775 µm, 800 µm, and more preferably 50-500 µm.

According to the present disclosure, the welding connection portion may also have a weld seam, and the polymer protective layer may have a filling protrusion extending into the weld seam, so as to further allow the polymer protective layer to fully attach to the welding connection portion and improve the binding force between the protective layer and the surface of the welding connection portion. The meaning of the weld seam is well known to those skilled in the art, that is, at least one of the depression, slot and gap formed after the welding that is lower than the original surface of the welding connection portion. Preferably, the depth of the weld seam may be 0-500 microns, such as 0 micron, 30 microns, 50 microns, 75 microns, 100 microns, 130 microns, 150 microns, 175 microns, 200 microns, 230 microns, 250 microns, 275 µm, 300 µm, 330 µm, 350 µm, 375 µm, 400 µm, 430 µm, 450 µm, 475 µm, 500 µm, more preferably 30-300 µm, and still more preferably 30-150 µm.

Further, in order to fully protect the welding connection portion and prevent the defects from being exposed, in a specific embodiment of the present disclosure, the polymer protective layer may also cover at least one of at least part of the electrode tab and at least part of the lead-out palte; or the polymer protective layer may also cover at least one of at least part of the electrode tab, at least part of the lead-out palte, and at least part of the connector.

According to the present disclosure, in order to make the polymer protective layer fully wrap and attach to the bulge welding defect so that the bulge welding defect is completely embedded in the polymer protective layer, in a specific embodiment of the present disclosure, the polymer protective layer may be a polymer protective layer formed by dispensing or coating an adhesive on the surface of the welding connection portion. In this embodiment, the method of dispensing or coating an adhesive can ensure that the polymer material fully contacts and attaches to the surface of the welding connection portion and the surface of the bulge welding defect when it has a certain fluidity, and forms a polymer protective layer by molding while it is maintained in the state of attachment. The resulting polymer protective layer can fully contact the surface of the welding connection portion, achieve maximum contact with and attachment to the surface of the bulge welding defect, thereby improving the protection for the welding connection portion by the polymer protective layer.

In order to further improve the adhesion between the protective layer and the bulge welding defect, to prevent the bulge welding defect from being displaced during use and improve the durability of the electrode assembly, in a specific embodiment of the present disclosure, the bulge welding defect may be fully contact with the polymer protective layer. Here, complete contact means that the bulge welding defect of the welding connection portion is embedded in the polymer protective layer, and the entire surface of the bulge welding defect is completely attached to the polymer and there is no gap between the surface of the weld defect and the polymer, within an error range as observed under a metallurgical microscope. It should be noted that due to the limitations from certain unavoidable process conditions, a void may exist between the surface of the bulge welding defect and the polymer protective layer, such as microbubbles. Where the void area occupies less than 10% of the contact surface area between the surface of the bulge welding defect and the polymer protective layer, it still falls within the protection scope of this application.

According to the present disclosure, in order to further improve the adhesion between the protective layer and the surface of the welding connection portion, preferably, the molding shrinkage of the polymer in the polymer protective layer may be 1-4%, such as 1%, 1.1%, 1.2%, 1.3 %, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, more preferably 1-3%, to avoid excessive shrinkage of the polymer after molding, resulting in a large gap between the polymer protective layer and the surface of the welding connection portion. The meaning of molding shrinkage is well known to those skilled in the art, that is, the difference (in percentages) between the size of the material before molding (for example, when the hot melt adhesive is heated, and the photocurable adhesive is not irradiated yet) and the size of a workpiece formed after molding (for example, when the hot melt adhesive is cured at a curing temperature, and the photocurable adhesive is cured under irradiation). The test method of molding shrinkage can refer to the standard GB/T15585-1995 Determination of shrinkage for injection moulding thermoplastics.

According to the present disclosure, the polymer in the polymer protective layer may be conventional in the art, preferably a polymer material that can withstand electrolyte immersion and is resistant to electrochemical oxidation-reduction. Further, to improve the adhesion of the polymer protective layer to the surface of the welding connection portion, the polymer in the polymer protective layer may preferably be a polymer material that has fluidity in a certain state and can be cured after the conditions are removed, so as to facilitate the polymer protective layer to fully fill between or embed the welding defect, and fully contact the surface of the welding connection portion to improve the adhesion. For example, in a preferred embodiment of the present disclosure, the polymer protective layer may be at least one of a hot-melt adhesive polymer protective layer, a photocurable adhesive polymer protective layer and a pressure-sensitive adhesive polymer protective layer, and preferably a pressure-sensitive adhesive polymer protective layer that is convenient in use. In an embodiment in which the electrode assembly of the present disclosure further includes a connector, a polymer protective layer is provided at both ends of the connector, and the polymers in the two polymer protective layers may be the same or different, and preferably the same.

According to the present disclosure, the meaning of hot-melt adhesive is well known to those skilled in the art, that is, a material having a fluidity and other physical properties varying with temperature within a certain temperature range. The type of the hot melt adhesive may be conventional in the art. It is preferably at least one selected from a atactic polypropylene hot melt adhesive, a copolymer of ethylene and/or propylene with an oxygen-containing olefin, polystyrene, a copolymer of styrene and butadiene, a copolymer of isoprene and butadiene, an epoxy-modified styrene-butadiene-styrene copolymer, and a dimer acid type polyamide hot melt adhesive. The above-mentioned preferred types of hot melt adhesives have suitable melting temperature and viscosity, where the melting temperature will not have impact on the performance of the electrode. They also have good curing performance and is resistant to electrolyte immersion, and can fully contact and be attached to the surface of the welding connection portion under a suitable fluidity condition. The formed protective layer has good adhesion to the surface of the welding connection portion, thus facilitating the application operation. The hot melt adhesive can be applied by a conventional method in the art, such as dispensing or coating.

According to the present disclosure, the meaning of photocurable adhesive is well known to those skilled in the art, that is, a material that is curable under irradiation. The photocurable adhesive can be of a conventional type in the art, such as UV curable adhesive and/or visible light curable adhesive. In a specific embodiment of the present disclosure, it is preferable that the photocurable adhesive is a UV curable adhesive to increase the curing rate. The UV curable adhesive can be of a conventional type in the art. Preferred UV curable adhesive in the present disclosure is at least one selected from the group consisting of an acrylate-based UV curable adhesive, an alicyclic epoxy resin-based UV curable adhesive, an aliphatic epoxy resin-based UV curable adhesive, an aromatic epoxy resin-based UV curable adhesive, a bisphenol A epoxy-modified acrylate-based UV-curable adhesive and a phenolic epoxy-modified acrylate-based UV-curable adhesive. The above-mentioned preferred types of UV curable adhesives have fast curing rate and good electrolyte resistance, and have suitable viscosity and fluidity in the molten state, which are beneficial for attachment to the surface of the welding connection portion and improving the adhesion of the protective layer.

According to the present disclosure, the meaning and types of pressure-sensitive adhesives are well known to those skilled in the art, that is, adhesives sensitive to pressure. Generally, the pressure-sensitive adhesive has a fluidity under pressure, and for example, can be selected from a rubber-based pressure-sensitive adhesive and a resin-based pressure-sensitive adhesive. Preferably, the pressure-sensitive adhesive may be at least one selected from a cross-linked acrylate-based pressure-sensitive adhesive, a silicone-based pressure-sensitive adhesive, a polyurethane-based pressure-sensitive adhesive and a rubber-based pressure-sensitive adhesive. The above-mentioned preferred types of pressure-sensitive adhesives have strong adhesion, is convenient in use, and have good electrolyte and electrochemical resistance. In addition, due to the presence of pressure during the use of pressure-sensitive adhesives, a pressure can be applied to large or high welding slag to reduce its height, thus effectively avoiding the presence of extremely large welding slag, and ensuring that the surface of the protective layer is flat. Moreover, after the pressure-sensitive adhesive is compacted and the pressure is removed, the protective layer becomes effective immediately. No heating device or light source is required during the process, which is conducive to improving the production efficiency.

In order to further improve the safety performance of the electrode assembly, in a specific embodiment of the present disclosure, the electrode assembly may further include an insulating layer that may cover the polymer protective layer, and in some embodiments also cover at least one of the electrode tab, the lead-out palte and the connector. The insulating layer may contain a conventional insulating material in the art. Preferably, the insulating layer may be at least one of a polypropylene insulating layer, a polyethylene insulating layer and a polyvinyl chloride insulating layer. The thickness of the insulating layer may be 30-300 µm, for example 30µm, 40µm, 50µm, 60µm, 70µm, 80µm, 90µm, 100µm, 110µm, 120µm, 130µm, 140µm, 150µm, 160µm, 170µm, 180µm, 190µm, 200µm, 210µm, 220µm, 230µm, 240µm, 250µm, 260µm 280µm, 290µm, 300µm, preferably 30-100µm. The method of applying the insulating layer to the polymer protective layer may also be conventional in the art, for example, bonding or sheathing. In an embodiment in which the electrode assembly of the present disclosure further includes a connector, the two welding connection portions at both ends of the connector are preferably provided with an insulating layer respectively, to further increase the protection for high-risk areas and better prevent inferior quality caused by bulge welding defects to improve the safety performance of the battery.

A second aspect of the present disclosure provides a method for preparing an electrode assembly for a lithium-ion secondary battery including an electrode and an electrode post, where an electrode tab is extended from the electrode, and a lead-out palte is extended from the electrode post. The method comprises the steps of
S1: welding the electrode tab to the electrode post and forming a welding connection portion, where the welding connection portion has a bulge welding defect; and
S2: applying a polymer on the surface of the welding connection portion and molding to form a polymer protective layer into which the bulge welding defect is embedded, where the applied amount of the polymer is such that the thickness of the polymer protective layer is greater than or equal to the thickness of the bulge welding defect.

According to the electrode assembly for a lithium-ion secondary battery of the present disclosure, a polymer protective layer is provided on the surface of the welding connection portion between the electrode tab and the lead-out palte, which can bury the bulge welding defect of the welding connection portion and allowed it to be embedded therein. In this way, the weld defects are immobilized without displacement, and the surface of the welding connection portion is smooth and free of protrusions, which effectively solves the problem of degraded battery safety performance caused by weld defects protruding and piercing the separator. Moreover, the polymer protective layer is resistant to electrolyte immersion and electrochemical oxidation-reduction, thus improving the durability and stability of the electrode assembly and battery.

According to the present disclosure, the method may comprises allowing the polymer protective layer to partially or fully cover the welding connection portion, and preferably cover the entire surface of the welding connection portion, so as to improve the stability of the weld portion.

According to the present disclosure, in order to make the polymer protective layer fully wrap and attach to the bulge welding defect so that the bulge welding defect is completely embedded in the polymer protective layer, in a specific embodiment of the present disclosure, the polymer protective layer may be formed by dispensing or coating an adhesive on the surface of the welding connection portion. In this embodiment, the method of dispensing or coating an adhesive can ensure that the polymer material fully contacts and attaches to the surface of the welding connection portion and the surface of the bulge welding defect when it has a certain fluidity, and forms a polymer protective layer by molding while it is maintained in the state of attachment. The resulting polymer protective layer can fully contact the surface of the welding connection portion, achieve maximum contact with and attachment to the surface of the bulge welding defect, thereby improving the protection for the welding connection portion by the polymer protective layer.

In a specific embodiment of the present disclosure, the welding connection portion includes a first welding connection portion. The method for forming the first welding connection portion includes welding the electrode tab to the electrode post to form first welding connection portion or welding lug to lead-out palte extending from the electrode post to form the first welding connection portion. The first welding connection portion includes an electrode tab side of the first welding connection portion, and a polymer is applied to the surface of the electrode tab side of the first welding connection portion and molded to form polymer protective layer.

In another specific embodiment of the present disclosure, the electrode assembly further includes a connector through which the electrode post and the electrode tab are welded together, and the welding connection portion includes a second welding connection portion and a third welding connection portion. In this situation, the method for forming the second welding connection portion and the third welding connection portion comprises welding one end of the connector to the electrode tab to form the second welding connection portion; and welding the other end of the connector to the electrode post to form the third welding connection portion, or welding the other end of the connector to the lead-out palte extending from the electrode post, to form the third welding connection portion. The third welding connection portion includes a connector side of the third welding connection portion. A polymer is applied to the surfaces of both sides of the second welding connection portion and the surface of the connector side of the third welding connection portion and molded respectively to form the polymer protective layer.

According to the present disclosure, in order to completely bury the bulge welding defect, the ratio of the thickness of the bulge welding defect to the thickness of the polymer protective layer may be (0.1-0.9):1, for example, 0.1:1, 0.2:1, 0.3:1, 0.4:1, 0.5:1, 0.6:1, 0.7:1, 0.8:1, 0.9:1, preferably (0.3-0.6):1. The thickness of the polymer protective layer refers to the maximum thickness from the surface of the polymer protective layer to the original surface of the welding connection portion. In a preferred thickness range, it can be further ensured that all bulge welding defects in the welding connection portion do not pierce through the polymer protective layer during the use of the electrode assembly, which effectively protects the electrode assembly, reduces the risk of short circuit of the battery caused by weld slag, and burrs piercing the separator, and improves the battery safety. Moreover, the protective layer can be quickly formed to prevent the protective layer from being too thick to affect the electrode assembly and performance of the electrode assembly.

According to the present disclosure, the meaning of bulge welding defect is well known to those skilled in the art. For example, the bulge welding defect may include burrs and/or weld slag protruding from the original surfaces of the electrode tab and lead-out palte, where the original surfaces of the electrode tab and the lead-out palte refer to the surfaces of the two before welding.

According to the present disclosure, the welding connection portion may also have a weld seam, and the applied polymer may enter the weld seam to form a filling protrusion, so as to further allow the polymer protective layer to fully attach to the welding connection portion and improve the binding force between the protective layer and the surface of the welding connection portion. The meaning of the weld seam is well known to those skilled in the art, that is, at least one of the depression, slot and gap formed after the welding that is lower than the original surface of the welding connection portion.

Further, the surface of the welding connection portion may be treated before applying a polymer to improve the binding force of the polymer protective layer. The surface treatment method may be conventional in the art. For example, the surface treatment may include surface etching treatment. The surface etching treatment may preferably be one or more of electrochemical etching, acid-base etching or oxidant etching to improve the bonding force between the metal and the organic polymer. The present invention may also include pretreatment of the surface of the welding connection portion before the surface treatment. The pretreatment is various treatments known to those skilled in the art, and generally includes polishing and cleaning the surface.

According to the present disclosure, in order to further improve the adhesion between the polymer protective layer and the surface of the welding connection portion, preferably, the molding shrinkage of the polymer in the polymer protective layer may be 1-4%, such as 1%, 1.1%, 1.2%, 1.3 %, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, more preferably 1-3%, to avoid excessive shrinkage of the polymer material after molding, resulting in a large gap between the polymer protective layer and the surface of the welding connection portion. The meaning and test method of molding shrinkage are as described above.

According to the present disclosure, the polymer in the polymer protective layer may be conventional in the art, preferably a polymer material that can withstand electrolyte immersion and is resistant to electrochemical oxidation-reduction. Further, to improve the adhesion of the polymer protective layer to the welding connection portion, the polymer in the polymer protective layer may preferably be a polymer that has fluidity in a certain state and can be cured after the conditions are removed, so as to facilitate the protective layer to fully fill between or embed the welding defect, and fully contact the surface of the welding connection portion to improve the adhesion. For example, in a preferred embodiment of the present disclosure, the polymer protective layer may be at least one of a hot-melt adhesive polymer protective layer, a photocurable adhesive polymer protective layer and a pressure-sensitive adhesive polymer protective layer, and further preferably a pressure-sensitive adhesive polymer protective layer that is convenient in use. In an embodiment in which the electrode assembly of the present disclosure further includes a connector, a polymer protective layer is provided at both ends of the connector, and the polymers in the two polymer protective layers may be the same or different, and preferably the same.

According to the present disclosure, the meaning of hot-melt adhesive is well known to those skilled in the art, that is, a material having a fluidity and other physical properties varying with temperature within a certain temperature range. The method of applying the hot melt adhesive may be conventional in the art, such as injection molding, hot pressing, spraying or coating. The meaning of photocurable adhesive is well known to those skilled in the art, that is, a material that is curable under irradiation. The method of applying the photocurable adhesive may be conventional in the art, such as injection molding, hot pressing, spraying or coating. The meaning and types of pressure-sensitive adhesives are well known to those skilled in the art, that is, adhesives sensitive to pressure. Generally, the pressure-sensitive adhesive has a fluidity under pressure.

To ensure the bonding effect and facilitate the operation, the operation in step S2 may include at least one of:
a: coating a hot-melt adhesive to be cured on the surface of the welding connection portion, and curing to form the polymer protective layer;
b: coating a photocurable adhesive to be cured on the surface of the welding connection portion; and curing under irradiation to form the polymer protective layer; and
c: allowing a pressure sensitive adhesive to cover the welding connection portion under pressure and then removing the pressure to form the polymer protective layer.

In the method a, the conditions for coating the hot melt adhesive in the molten state can be varied within a relatively large range. Preferably, the temperature of the hot melt adhesive in the molten state can be 100-180°C, for example, 100°C, 110°C, 120°C, 130°C, 140°C, 150°C, 160°C, 170°C, 180°C, and preferably 110-150°C; the viscosity can be 1000-10000CP, for example 1000CP, 1500CP, 2000CP, 2500CP, 3000CP, 3500CP, 4000CP, 4500CP, 5000CP, 5500CP, 6000CP, 6500CP, 7000CP, 7500CP, 8000CP, 8500CP, 9000CP, 9500CP, 10000CP, and preferably 1500-5000CP; the curing temperature can be 20-25°C, such as 20°C, 21°C, 22°C, 23°C, 24°C, and 25°C; and the curing time can be 0-30s, for example, 1s, 5s, 10s, 15s, 17s, 20s, 22s, 25s, 30s, and preferably 15-25s.

According to the present disclosure, the type of hot melt adhesives may be conventional in the art. Further, in order to meet the above-mentioned melt coating conditions, the hot-melt adhesive is preferably at least one selected from a atactic polypropylene hot melt adhesive, a copolymer of ethylene and\ or propylene with an oxygen-containing olefin, polystyrene, a copolymer of styrene and butadiene, a copolymer of isoprene and butadiene, an epoxy-modified styrene-butadiene-styrene copolymer, and a dimer acid type polyamide hot melt adhesive. The above-mentioned preferred types of hot melt adhesives have suitable melting temperature and viscosity, where the melting temperature will not have impact on the performance of the electrode. They also have good curing performance and is resistant to electrolyte immersion, and can fully contact and be attached to the surface of the welding connection portion under a suitable fluidity condition. The formed protective layer has good adhesion to the surface of the welding connection portion, thus facilitating the coating operation.

In the method b, the wavelength and intensity of the light can be selected according to the type of the photocurable adhesive, which is well known to those skilled in the art and will not be repeated here.

Further, in order to ensure that the photocurable adhesive has suitable fluidity before curing so that it can be fully attached to, infiltrate or fill the aforementioned weld defect, preferably, the viscosity of the photocurable adhesive can be 1000-5000CP, such as 1000CP, 1500CP, 2000CP, 2500CP, 3000CP, 3500CP, 4000CP, 4500CP, 5000CP, and preferably 1000-3000CP. Further, in order to ensure the production efficiency, the irradiation time can be 5-20s, such as 5s, 10s, 11s, 12s, 13s, 14s, 15s, 17s, 20s, and preferably 10-15s.

According to the present disclosure, the photocurable adhesive can be of a conventional type in the art, such as UV curable adhesive and/or visible light curable adhesive. In a specific embodiment of the present disclosure, it is preferable that the photocurable adhesive is a UV curable adhesive to increase the curing rate. The UV curable adhesive can be of a conventional type in the art. Preferred UV curable adhesive in the present disclosure is at least one selected from the group consisting of an acrylate-based UV curable adhesive, an alicyclic epoxy resin-based UV curable adhesive, an aliphatic epoxy resin-based UV curable adhesive, an aromatic epoxy resin-based UV curable adhesive, a bisphenol A epoxy-modified acrylate-based UV-curable adhesive and a phenolic epoxy-modified acrylate-based UV-curable adhesive. The above-mentioned preferred types of UV curable adhesives have fast curing rate and good electrolyte resistance, and have suitable viscosity and fluidity in the molten state, which are beneficial for attachment to the surface of the welding connection portion and improving the adhesion of the protective layer.

In the method c, in order to ensure the bonding effect, the applied pressure may be 0.2-0.8 MPa, such as 0.2 MPa, 0.3 MPa, 0.4 MPa, 0.5 MPa, 0.6 MPa, 0.7 MPa, 0.8 MPa, and preferably 0.4-0.6 MPa. In the method, due to the presence of pressure during the use of pressure-sensitive adhesives, a pressure can be applied to large or high welding slag to reduce its height, thus effectively avoiding the presence of extremely large welding slag. Moreover, after the pressure-sensitive adhesive is compacted and the pressure is removed, the polymer protective layer becomes effective immediately. No heating device or light source is required during the process, which is conducive to improving the production efficiency.

According to the present disclosure, the pressure-sensitive adhesive can be selected from a rubber-based pressure-sensitive adhesive and a resin-based pressure-sensitive adhesive. Preferably, the pressure-sensitive adhesive may be at least one selected from a cross-linked acrylate-based pressure-sensitive adhesive, a silicone-based pressure-sensitive adhesive, a polyurethane-based pressure-sensitive adhesive and a rubber-based pressure-sensitive adhesive. The above-mentioned preferred types of pressure-sensitive adhesives are highly viscous, easy to use, and have good electrolyte and electrochemical resistance.

Further, in order to improve the viscosity and wettability of the pressure-sensitive adhesive to the material to be adhered, to improve the adhesion between the protective layer and the surface of the welding connection portion, in an embodiment of the present disclosure, the pressure-sensitive adhesive may be a rubber-based pressure sensitive adhesive that is preferably modified nitrile rubber. Further, the content by weight of the acrylonitrile structural unit in the modified nitrile rubber may be 25%-50%, such as 25%, 27%, 30%, 32%, 35%, 37%, 40%, 43%, 45%, 47%, and 50%, the molecular weight can be 100,000 to 300,000 (weight average molecular weight), such as 100,000, 120,000, 140,000, 160,000, 180,000, 200,000, 220,000, 240,000, 260,000, 280,000, and 300,000, to improve the strength and adhesion of the pressure sensitive adhesive.

To further improve the safety performance of the electrode assembly, in a specific embodiment of the present invention, the method further includes: covering the polymer protective layer with an insulating material to form an insulating layer. The insulating material may be conventional in the art, and preferably at least one of insulating polypropylene, polyethylene and polyvinyl chloride. The method of applying the insulating layer to the polymer protective layer may also be conventional in the art, for example, bonding or sheathing. In an embodiment in which the electrode assembly of the present disclosure further includes a connector, the method further comprises providing an insulating layer respectively at the two welding connection portions at both ends of the connector, to further increase the protection for high-risk areas and further improve the safety performance of the battery.

A third aspect of the present disclosure provides a lithium-ion secondary battery, which includes an electrode assembly for a lithium-ion secondary battery according to the first aspect of the present disclosure, or an electrode assembly for a lithium-ion secondary battery obtained by the method according to the second aspect of the present disclosure and a cover plate.

In the lithium-ion secondary battery of the present disclosure, high-risk areas with welding slag and burrs in the welding connection portion are effectively protected, which can reduce the risk of short circuit caused by weld slag and burrs piercing the separator, and improve the performance safety of the battery.

According to the present disclosure, the electrode post in the electrode assembly of the lithium-ion secondary battery can be provided on the cover plate for connection with an external circuit, and the lead-out palte can be connected to the electrode post and extend to the inside of the cover plate for being welded to the electrode tab or the connector connected to the electrode tab.

According to the present disclosure, the lithium-ion secondary battery may include a positive electrode component and a negative electrode component, and preferably the positive electrode component and the negative electrode component are assemblies of the present disclosure, so as to further improve the safety and stability of the battery.

The present disclosure will be further described by the following examples, but the present disclosure is not limited in any way. In the following examples and comparative examples of the present disclosure, the shear strength is tested following GB/T 7124-2008 Adhesives - Determination of tensile lap-shear strength of rigid-to-rigid bonded assemblies, the cross-sectional morphology of the polymer protective layer is observed under a metallurgical microscope, and the thickness is also measured with a metallurgical microscope.

The following describes the present disclosure with reference to specific embodiments. It should be noted that, these embodiments are merely descriptive, and do not limit the present disclosure in any manner.

### Example 1

The electrode assembly for a lithium-ion secondary battery and preparation method thereof according to the present disclosure are described in this example.

As shown in Figs. 2 and 3, the electrode assembly includes an electrode 7, an electrode post 3 and a connector 5 which are electrically connected. An electrode tab 6 is extended from the electrode 7, a lead-out palte 4 is extend from the electrode post 3, and the two ends of the connector 5 are welded to the electrode tab 6 and the lead-out palte 4 respectively to form two welding connection portions. High-molecular-weight butyl rubber pressure-sensitive adhesive (available from ITW, product number sm5190) is coated on the surface of the welding connection portion under a pressure of 0.6 MPa, and a polymer protective layer 1 is formed after the pressure is removed. The ratio of the maximum height of the bulge welding defect 2 to the thickness of the polymer protective layer 1 is 0.5:1.

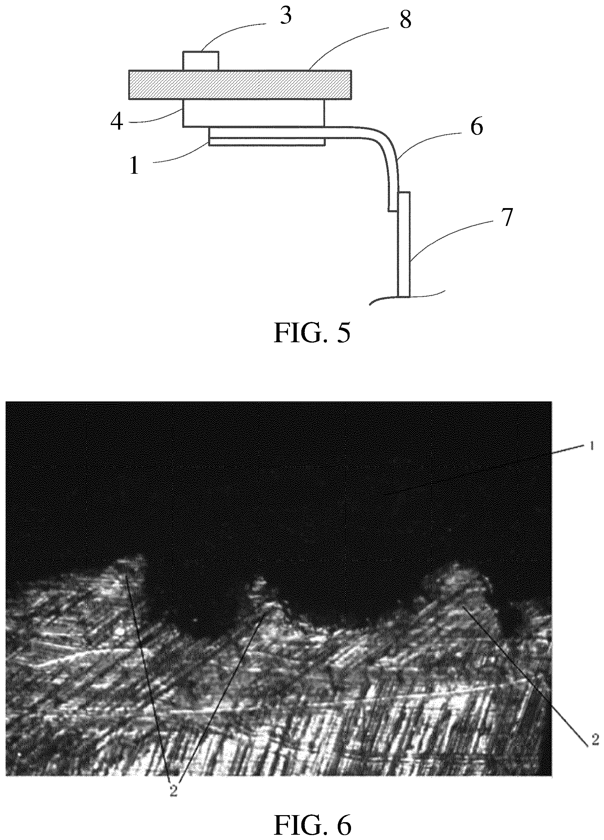

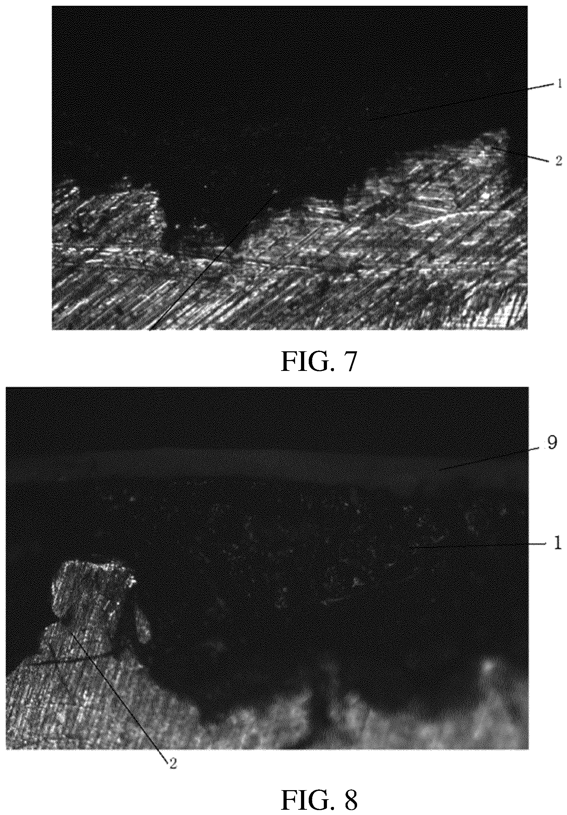

After the electrode assembly is immersed in the electrolyte at a high temperature (80°C) for 180 days, the cross-sectional morphologies of the welding connection portion and the polymer protective layer before and after immersion are observed. The results are shown in Figs. 6 and 7 respectively. The shear strengths of the polymer protective layer before and after immersion are tested, and the results are listed in Table 1.

### Example 2

The electrode assembly for a lithium-ion secondary battery and preparation method thereof according to the present disclosure are described in this example.

The method of Embodiment 1 is used, except that insulating polypropylene is adhered to the polymer protective layer 1 to form an insulating layer 9.

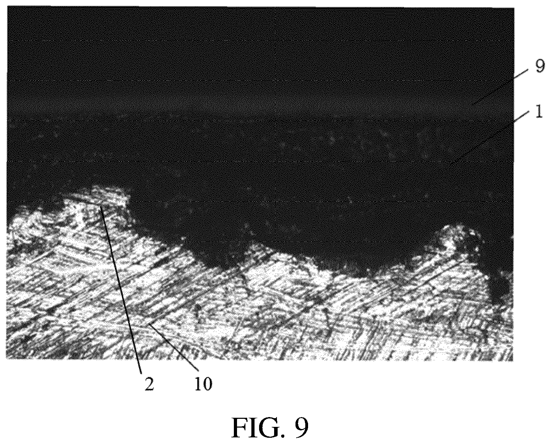

After the electrode assembly is immersed in the electrolyte at a high temperature (80°C) for 180 days, the cross-sectional morphologies of the welding connection portion and the polymer protective layer before and after immersion are observed. The results are shown in Figs. 8 and 9 respectively. The shear strengths of the polymer protective layer before and after immersion are tested, and the results are listed in Table 1.

### Example 3

The electrode assembly for a lithium-ion secondary battery and preparation method thereof according to the present disclosure are described in this example.

The electrode assembly includes an electrode, an electrode post, and a connector which are electrically connected. An electrode tab is extended from the electrode, a lead-out palte is extend from the electrode post, and the two ends of the connector are welded to the electrode tab and the lead-out palte respectively to form two welding connection portions. The hot melt adhesive (purchased from Aozon Company, product number B03) is melted at 160°C (melt viscosity 2500CP) then coated on the surface of the welding connection portion, and cured at normal temperature for 15 seconds to form a polymer protective layer with a thickness of 300 µm.

After the electrode assembly is immersed in the electrolyte at a high temperature (80°C) for 180 days, the shear strengths of the polymer protective layer before and after immersion are tested, and the results are listed in Table 1.

### Example 4

The electrode assembly for a lithium-ion secondary battery and preparation method thereof according to the present disclosure are described in this example.

The electrode assembly includes an electrode, an electrode post, and a connector which are electrically connected. An electrode tab is extended from the electrode, a lead-out palte is extend from the electrode post, and the two ends of the connector are welded to the electrode tab and the lead-out palte respectively to form two welding connection portions. The UV curable adhesive (purchased from Debang, product number 703, viscosity 2000CP) was coated on the surface of the welding connection portion, and cured for 10 seconds under UV irradiation, to form a polymer protective layer with a thickness of 250 µm.

After the electrode assembly is immersed in the electrolyte at a high temperature (80°C) for 180 days, the shear strengths of the polymer protective layer before and after immersion are tested, and the results are listed in Table 1.

### Example 5

The electrode assembly for a lithium-ion secondary battery and a preparation method thereof according to the present disclosure are described in this example.

The method of Example 4 is used, except that insulating polypropylene is adhered to the polymer protective layer to form an insulating layer.

After the electrode assembly is immersed in the electrolyte at a high temperature (80°C) for 180 days, the shear strengths of the polymer protective layer before and after immersion are tested, and the results are listed in Table 1.

### Example 6

The same method and material as those in Example 1 are used, except that the ratio of the maximum height of the weld defect to the thickness of the pressure-sensitive adhesive layer is 0.3:1.

After the electrode assembly is immersed in the electrolyte at a high temperature (80°C) for 180 days, the shear strengths of the polymer protective layer before and after immersion are tested, and the results are listed in Table 1.

### Example 7

As shown in Figs. 4 and 5, the same method and material as those in Example 1 are used, except that the electrode assembly has no connector, the electrode tab 6 is extended from the electrode 7, the lead-out palte 4 is extended from the electrode post 3, and the electrode tab 6 and the lead-out palte 4 are welded to form the welding connection portion.

After the electrode assembly is immersed in the electrolyte at a high temperature (80°C) for 180 days, the shear strengths of the polymer protective layer 1 before and after immersion are tested, and the results are listed in Table 1.

### Example 8

The same method and material as those in Example 3 are used, except that the electrode assembly has no connector, the electrode tab is extended from the electrode, the lead-out palte is extended from the electrode post, and the electrode tab and the lead-out palte are welded to form the welding connection portion.

After the electrode assembly is immersed in the electrolyte at a high temperature (80°C) for 180 days, the shear strengths of the polymer protective layer before and after immersion are tested, and the results are listed in Table 1.

### Example 9

The method of Example 8 is used, except that insulating polypropylene is adhered to the polymer protective layer to form an insulating layer.

After the electrode assembly is immersed in the electrolyte at a high temperature (80°C) for 180 days, the shear strengths of the polymer protective layer before and after immersion are tested, and the results are listed in Table 1.

### Example 10

The same method and material as those in Example 4 are used, except that the electrode assembly has no connector, the electrode tab is extended from the electrode, the lead-out palte is extended from the electrode post, and the electrode tab and the lead-out palte are welded to form the welding connection portion.

After the electrode assembly is immersed in the electrolyte at a high temperature (80°C) for 180 days, the shear strengths of the polymer protective layer before and after immersion are tested, and the results are listed in Table 1.

### Example 11

The same method and material as those in Example 8 are used, except that the ratio of the maximum height of the weld defect to the thickness of the hot-melt adhesive layer is 0.3:1.

After the electrode assembly is immersed in the electrolyte at a high temperature (80°C) for 180 days, the shear strengths of the polymer protective layer before and after immersion are tested, and the results are listed in Table 1.

### Comparative Example 1

The same method and material as those in Example 1 are used, except that the ordinary insulating tape (purchased from 3M company, product number 471) is attached to the surface of the welding connection portion.

After the electrode assembly is immersed in the electrolyte at a high temperature (80°C) for 180 days, the shear strengths of the polymer protective layer before and after immersion are tested, and the results are listed in Table 1.

**Table 1**

| | Shear strength (before immersion, MPa) | Shear strength (after immersion, MPa) |
|---|---|---|
| Example 1 | 0.90 | 0.86 |
| Example 2 | 0.85 | 0.77 |
| Example 3 | 1.40 | 1.25 |
| Example 4 | 1.35 | 1.22 |
| Example 5 | 1.45 | 1.35 |
| Example 6 | 0.95 | 0.87 |
| Example 7 | 1.00 | 0.90 |
| Example 8 | 1.55 | 1.38 |
| Example 9 | 1.54 | 1.36 |
| Example 10 | 1.73 | 1.60 |
| Example 11 | 1.58 | 1.40 |
| Comparative Example 1 | 0.75 | 0.05 |

From the data in Table 1, it can be seen that compared with the electrode assembly with ordinary insulating tape (Comparative Example 1), the polymer protective layer of the electrode assembly for a lithium-ion secondary battery according to this application has higher shear strength before and after immersion. Especially after immersion in the electrolyte at a high temperature, the shear strength of the polymer protective layer of the present application does not decrease significantly, and the polymer protective layer can still maintain effective protection for the welding connection portion, which improves the safety of the battery.

The foregoing describes preferred implementations of the present disclosure in detail. However, the present disclosure is not limited to the specific details in the foregoing implementations, various simple variations may be made to the technical solutions of the present disclosure within the scope of the technical idea of the present disclosure, and such simple variations shall all fall within the protection scope of the present disclosure.

It should be further noted that the specific technical features described in the above specific implementations may be combined in any suitable manner without contradiction. To avoid unnecessary repetition, various possible combinations are not further described in the present disclosure.

In addition, the various implementations of the present disclosure may be combined without departing from the idea of the present disclosure, and such combinations shall also be regarded as content disclosed in the present disclosure.

In the description of the specification, the description with reference to the terms "an embodiment", "some embodiments", "example", "specific example", or "some example" and so on means that specific features, structures, materials or characteristics described in connection with the embodiment or example are embraced in at least one embodiment or example of the present disclosure. In the present specification, the illustrative expression of the above terms is not necessarily referring to the same embodiment or example. Moreover, the described specific features, structures, materials or characteristics may be combined in any suitable manners in one or more embodiments. In addition, where there are no contradictions, the various embodiments or examples described in this specification and features of various embodiments or examples can be combined by those skilled in the art.

Although the embodiments of the present disclosure have been illustrated and described above, it is to be understood that the above embodiments are exemplary and not to be construed as limiting the present disclosure, and that changes, modifications, substitutions and alterations can be made by those skilled in the art without departing from the scope of the present disclosure.

## Claims

1. An electrode assembly for a lithium-ion secondary battery, comprising an electrode plate and an electrode post, wherein an electrode tab is extended from the electrode plate; a welding connection portion is formed by welding between the electrode tab and the electrode post; the welding connection portion comprises a bulge welding defect; the surface of the welding connection portion is covered with a polymer protective layer, and the thickness of the polymer protective layer is greater than or equal to the thickness of the bulge welding defect; and the bulge welding defect is embedded in the polymer protective layer.

2. The electrode assembly according to claim 1, wherein the bulge welding defect is fully contact with the polymer protective layer.

3. The electrode assembly according to claim 1 or 2, wherein the polymer protective layer is a polymer protective layer formed by dispensing or applying an adhesive on the surface of the welding connection portion.

4. The electrode assembly according to any one of claims 1-3, wherein the welding connection portion comprises a first welding connection portion,
the first welding connection portion is formed by welding the electrode post and the electrode tab or the first welding connection portion is formed by welding a lead-out plate extending from the electrode post and the electrode tab, wherein
the first welding connection portion comprises an electrode tab side, and the polymer protective layer covers the surface of the electrode tab side.

5. The electrode assembly according to any one of claims 1 to 4, further comprising a connector, wherein the welding connection portion comprises a second welding connection portion and a third welding connection portion; and one end of the connector is welded to the electrode tab to form the second welding connection portion;
another end of the connector is welded to the electrode post to form the third welding connection portion, or welded to the lead-out plate extending from the electrode post to form the third welding connection portion;
the third welding connection portion comprises a connector side of the third welding connection portion; and
the polymer protective layer at least covers both side surfaces of the second welding connection portion and the surface of the connector side of the third welding connection portion.

6. The electrode assembly according to any one of claims 1 to 5, wherein the ratio of the thickness of the bulge welding defect to the thickness of the polymer protective layer is (0.1-0.9):1.

7. The electrode assembly according to any one of claims 1 to 6, wherein the welding connection portion further comprises a weld seam, and the polymer protective layer c a filling protrusion extending into the weld seam.

8. The electrode assembly according to any one of claims 1 to 7, wherein the electrode assembly further comprises an insulating layer covering the polymer protective layer.

9. The electrode assembly according to any one of claims 1 to 8, wherein the insulating layer is selected from at least one of a polypropylene insulating layer, a polyethylene insulating layer, and a polyvinyl chloride insulating layer.

10. The electrode assembly according to any one of claims 1 to 9, wherein the molding shrinkage of the polymer in the polymer protective layer is 1% to 4%.

11. The electrode assembly according to any one of claims 1 to 10, wherein the polymer protective layer is selected from at least one of a hot-melt adhesive polymer protective layer, a photocurable adhesive polymer protective layer, and a pressure-sensitive adhesive polymer protective layer.

12. The electrode assembly according to any one of claims 1 to 11, wherein, the hot-melt adhesive is selected from at least one of a atactic polypropylene hot melt adhesive, a copolymer of ethylene and/or propylene with an oxygen-containing olefin, polystyrene, a copolymer of styrene and butadiene, a copolymer of isoprene and butadiene, an epoxy-modified styrene-butadiene-styrene copolymer, and a dimer acid type polyamide hot melt adhesive;
wherein the photocurable adhesive is a UV curable adhesive that selected from at least one of an acrylate-based UV curable adhesive, an alicyclic epoxy resin-based UV curable adhesive, an aliphatic epoxy resin-based UV curable adhesive, an aromatic epoxy resin-based UV curable adhesive, a bisphenol A epoxy-modified acrylate-based UV-curable adhesive and a phenolic epoxy-modified acrylate-based UV-curable adhesive; and
the pressure-sensitive adhesive is selected from at least one of a cross-linked acrylate-based pressure sensitive adhesive, a silicone-based pressure sensitive adhesive, a polyurethane-based pressure sensitive adhesive, and a rubber-based pressure sensitive adhesive.

13. A method for preparing an electrode assembly for a lithium-ion secondary battery according to any one of claims 1 to 12, the electrode assembly comprising an electrode plate and an electrode post, an electrode tab being extended from the electrode plate, the method comprising the steps of
S1: welding the electrode tab to the electrode post and forming a welding connection portion, where the welding connection portion has a bulge welding defect; and
S2: applying a polymer on the surface of the welding connection portion and molding to form a polymer protective layer into which the bulge welding defect is embedded, wherein the amount of the polymer is such that the thickness of the polymer protective layer is greater than or equal to the thickness of the bulge welding defect.

14. The method according to claim 13, wherein the polymer protective layer is formed by dispensing an adhesive or applying an adhesive.

15. The method according to claim 13 or 14, wherein the welding connection portion comprises a first welding connection portion, and the method for forming the first welding connection portion comprises:
welding the electrode tab to the electrode post to form the first welding connection portion or welding the electrode tab to the lead-out palte extending from the electrode post to form the first welding connection portion, wherein
the first welding connection portion comprises an electrode tab side of the first welding connection portion, and a polymer is applied to the surface of the electrode tab side of the first welding connection portion and molded to form the polymer protective layer.

16. The method according to any one of claims 13 to 15, further comprising a connector, wherein the welding connection portion comprises a second welding connection portion and a third welding connection portion; and the method for forming the second welding connection portion and the third welding connection portion comprises:
welding one end of the connector to the electrode tab to form the second welding connection portion; and
welding another end of the connector to the electrode post to form the third welding connection portion, or welding another end of the connector to the lead-out palte extending from the electrode post to form the third welding connection portion, wherein
the third welding connection portion comprises a connector side of the third welding connection portion; and
a polymer is applied to the surfaces of both sides of the second welding connection portion and the surface of the connector side of the third welding connection portion and molded to form the polymer protective layer.

17. The method according to any one of claims 13 to 16, wherein the operation in step S2 comprises at least one of:
a: coating a hot-melt adhesive to be cured on the surface of the welding connection portion, and curing to form the polymer protective layer;
b: coating a photocurable adhesive to be cured on the surface of the welding connection portion; and curing under irradiation to form the polymer protective layer; and
c: allowing a pressure sensitive adhesive to cover the welding connection portion under pressure and then removing the pressure to form the polymer protective layer.

18. The method according to any one of claims 13 to 17, wherein the temperature of the hot melt adhesive in the molten state is 100-180°C, the viscosity is 1000-10000 CP, the curing temperature is 20-25°C, and the curing time is 0-30s;
the viscosity of the photocurable adhesive is 1000-5000CP, and the irradiation time is 5-20s; and
the pressure is 0.2-0.8 MPa.

19. The method according to any one of claims 13 to 18, further comprising: covering the polymer protective layer with an insulating material to form an insulating layer.

20. A lithium-ion secondary battery, comprising a cover plate, and an electrode assembly for a lithium-ion secondary battery according to any one of claims 1 to 12 or an electrode assembly for a lithium-ion secondary battery prepared by the method according to any one of claims 13 to 19.
